# EUROPEAN PATENT APPLICATION

(11) **EP 2 958 405 A1**
(43) Date of publication of application: **23.12.2015**
(21) Application number: 14752162.9
(22) Date of filing: 13.02.2014
(51) Int. Cl.: H05B 37/02

(54) **POWER SUPPLY CIRCUIT FOR ALTERING FLICKERING FREQUENCY OF LIGHT-EMITTING DIODE**

(30) Priority: 14.02.2013 KR 20130015924
(71) Applicant: J&C Technology Co., Ltd., Gimcheon-si, Gyeongsangbuk-do 740-040 (KR)
(72) Inventor: JANG, Min Jun, Suwon-si, Gyeonggi-do 443-777 (KR); JANG, Woo Jun, Gimcheon-si, Gyeongsangbuk-do 740-770 (KR)
(74) Representative: v. Bezold & Partner Patentanwälte - PartG mbB
(86) International application number: PCT/KR2014/001171
(87) International publication number: WO 2014/126392

(57) **Abstract**

The present invention relates to a power supply circuit, and more particularly to a power supply circuit for increasing the flickering frequency of a light-emitting diode by means of a charging/discharging circuit and a switch connected between an alternating voltage source and a load. A power supply circuit according to the present invention includes: a rectifying circuit connected to the alternating voltage source for full-wave rectifying the alternating voltage thereof; a charging/discharging circuit with one end connected to the output terminal of the rectifying circuit and a light-emitting diode array and the other end to ground so as to be charged with the output voltage of the rectifying circuit and to supply power to the light-emitting diode array; a first switch arranged in the path connecting the charging/discharging circuit and the light-emitting diode array; and a controller for controlling the first switch so as to enable the charging/discharging circuit to discharge in the interval A less than the drive voltage of the light-emitting diode array, thus causing the light-emitting diode array to flicker at least one time in the interval A. The power supply circuit according the present invention can apply by means of the charging/discharging circuit and the switch a voltage of pulse-type equal to or greater than the drive voltage to the peripheral regions of a phase of 180 degrees where the voltage supplied from the alternating voltage source is equal to or less than the drive voltage and so cannot drive the light-emitting diodes. Thus, the invention can increase the flickering frequency of the light-emitting diode to more than 240Hz (when the alternating voltage source is 60Hz).

## Description

### Technical Field

The present invention relates to a power supply circuit. More particularly, the present invention pertains to a power supply circuit for increasing the flickering frequency of a light-emitting diode and improving the visibility by means of a charging/discharging circuit and a switch installed between an alternating voltage source and a load.

### Background Art

A light-emitting diode (LED) has merits in terms of the light efficiency and the durability and, therefore, draws attention as a light source for a backlight of an illumination device or a display device.

The light-emitting diode is driven at a low direct current. Thus, in the prior art, there has been used a power supply device for converting a commercial AC voltage (AC 220 V) to a DC voltage. For example, use has been made of a SMPS (Switched-Mode Power Supply), a linear power, etc. However, this power supply device is usually low in the conversion efficiency. Among the components used, an electrolytic capacitor is short in the lifespan. Thus, the use of the power supply device poses a problem of shortening the lifespan of a light-emitting diode illumination device.

In order to solve this problem, there has been developed a method in which two light-emitting diode strings are directly connected to an AC power supply in a forward direction and a reverse direction without performing DC conversion. However, this method suffers from a problem in that only 50% or less of the connected light-emitting diodes are turned on, consequently exhibiting low efficiency. Furthermore, a current flowing through the light-emitting diode is abruptly changed as a result of a change in the magnitude of an input voltage. This may adversely affect the light-emitting diode elements and may pose a problem in that a change in brightness is large. In addition, a current is allowed to flow through a circuit only when the magnitude of an input voltage is equal to or larger than a value capable of operating all the light-emitting diodes included in the light-emitting diode strings. For that reason, a waveform difference between an alternating current flowing through the circuit and an alternating voltage is large. This poses a problem in that the power factor is reduced.

In order to solve the problem inherent in the method of directly using an AC power supply, there have been developed different methods in which an alternating current is used after rectification through a bridge circuit. For example, Korean Patent Application Publication No. 10-2012-0041093 discloses a method in which, after rectifying an alternating voltage, the number of light-emitting diodes applied with the rectified voltage is adjusted depending on the change in the magnitude of the rectified voltage. In this method, as compared with a method of directly using an AC power supply, the number of operating light-emitting diodes increases. Therefore, this method has an advantage in that the efficiency is high and the current supply time is short, thereby improving the power factor.

The method of using an AC power supply after rectifying the same by means of a bridge circuit has a problem in that, since the light-emitting diodes are driven by a full-wave rectified wave having a frequency of 120 Hz, the magnitude of an AC power supply becomes equal to or smaller than a light-emitting diode drive voltage in a significant region around a phase of 180 degrees, consequently generating a lighting failure.

Human eyes recognize a light source flickering at a flicker fusion frequency or higher as a continuously turned-on light source rather than an intermittently flickering light source. Accordingly, a light-emitting diode flickering at a flicker fusion frequency or higher is felt by human eyes as if it is continuously turned on. Most of the human eyes recognize a light source flickering at 75 Hz or higher as a continuously turned-on light source. However, a light-sensitive person may recognize the flicker of a light-emitting diode flickering at 120 Hz and, therefore, may suffer from photo-seizure. For that reason, it is preferred that the light-emitting diode flickers at a high frequency as far as possible.

In Japan, it is stipulated in the lighting certification standard that no flicker phenomenon should be generated between 100 Hz and 500 Hz. European countries are trying to stipulate that a lighting fixture should be driven at a frequency of 150 Hz or higher. In recent years, U.S.A. provides the energy star certification provision which prescribes that a lighting fixture having a flicker level not exceeding a predetermined level should be excluded from a certification candidate. Under these circumstances, there may be a situation that it is impossible to sell a light-emitting diode driven by a full-wave rectified wave.

In order to ameliorate this situation, Korean Patent Application Publication No. 10-2010-0104362 discloses a method which makes use of a valley fill circuit. This method is capable of providing a flicker phenomenon improvement effect. However, a capacitor having a large capacity has to be used in this method. Use of the capacitor poses an adverse effect in that the power factor becomes poor. Moreover, if an input voltage is low, a flicker appears at 120 Hz. In addition, a plurality of parallel-connected light-emitting diodes is individually operated on a group-by-group basis. Thus, the number of light-emitting diodes becomes larger and the cost grows higher. Moreover, there may be generated a turned-off array.

As another improvement method, it may be possible to use a charging/discharging circuit disclosed in Korean Patent Application Publication No. 10-2012-0082468. In this method, a flicker phenomenon is ameliorated. However, this method fails to overcome a limit that a flicker is generated at a frequency of 120 Hz. Moreover, if an input voltage decreases, charging is not sufficiently carried out and a discharging start point becomes shorter. Thus, the flicker phenomenon is conspicuous.

The method of using an AC power supply after rectifying the same by means of a bridge circuit has another problem. Specifically, if a drive voltage is set high, a phase region where a light-emitting diode is turned on becomes small. This reduces the light-emitting diode use efficiency (the effective power consumption of the light-emitting diode/the power consumption of the light-emitting diode during the DC rated current operation) and the power factor. If a drive voltage is set low, a significant amount of electric power is consumed as heat and the power supply efficiency is reduced.

Korean Patent Application Publication No. 10-2012-0074502 discloses a lighting device provided with a charging/discharging block. In a charging interval, the charging/discharging block charges electric charges at a drive terminal. The charging/discharging block is discharged at a voltage equal to or less than a drive voltage of a light-emitting diode array, thereby removing an interval where the light-emitting diode array is turned off.

As a further improvement method, there is available a method of increasing the flickering frequency of a light-emitting diode. U.S. Patent No. 8,299,724 discloses a method in which a current flowing through a light-emitting diode array is cut off by an OVP (over-voltage protection) element when a drive terminal voltage is at a peak value, thereby increasing the flickering frequency of the light-emitting diode array to become four times as high as an input AC power supply frequency. However, this method suffers from a problem in that, if the drive terminal voltage is equal to or lower than the drive voltage of the light-emitting diode array, a turned-off interval becomes longer.

Furthermore, U.S. Patent Application Publication No. 2012-0229041 discloses a method in which electric energy is stored by means of an energy storing element such as a capacitor or the like. If the magnitude of a drive terminal voltage becomes equal to or smaller than a drive voltage of a light-emitting diode array, the energy storing element is discharged so that the frequency of a current applied to the light-emitting diode array becomes four times as high as an input AC power supply frequency.

As another method of driving a light-emitting diode using an AC power supply, Korean Patent Application Publication No. 10-2011-0091444 discloses a method in which a TRIAC is used in dimming control. However, this method suffers from a problem in that a turned-off interval becomes longer, as a result of which the light-emitting diode cannot serve as a lighting device.

In the meantime, as a method of realizing a high-efficiency lighting device and consequently saving electric energy, an attempt has been made to consider the aspect of psychophysics which studies the relationship between a cognitive phenomenon and a physical property of a stimulus.

In general, the amount of light energy generated in a lighting device is increased in proportion to the amount of input electric energy. However, it is another matter how human eyes recognize the light.

A light-emitting diode is controlled by a constant current control method which makes use of a DC power supply or a pulse width modulation control method which makes use of a pulse voltage.

The pulse width modulation control method is a control method in which electric power is controlled by adjusting a pulse frequency and a duty cycle. Human eyes recognize a light source flickering at a flicker fusion frequency or higher as a continuously turned-on light source rather than an intermittently flickering light source. Accordingly, if a light-emitting diode is driven by a pulse voltage at a flicker fusion frequency or higher, human eyes recognizes the light-emitting diode as if it is continuously turned on. Most of the human eyes recognize a light source flickering at 75 Hz or higher as a continuously turned-on light source.

Results of studies on how human eyes recognize the brightness of an intermittently flickering light source have been announced from 1900s.

According to the Talbot-Plateau law, it is said that a human who observes an intermittently flickering light source recognizes the light source as if it is continuously turned on at an average brightness.

Furthermore, according to the Broca-Sulzer law, it is said that when exposed to strong light such as camera flash light or the like, human eyes feel the light several times as bright as the actual light brightness.

According to the recent study conducted at Ehime University in Japan, it is said that if a pulse voltage is used, the Broca-Sulzer effect has a larger influence than the Talbot-Plateau effect, whereby human eyes recognize a light source to be brighter than an average brightness.

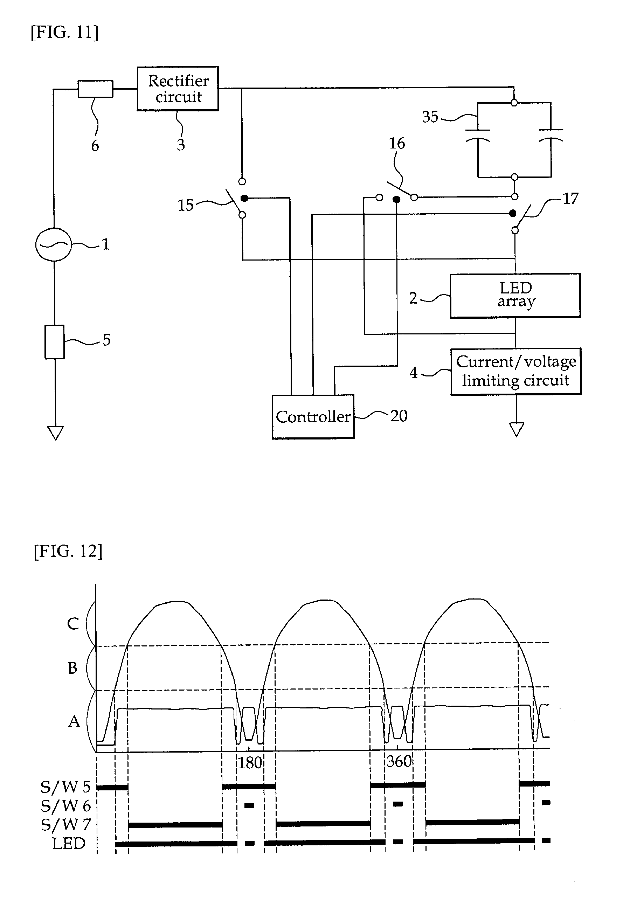

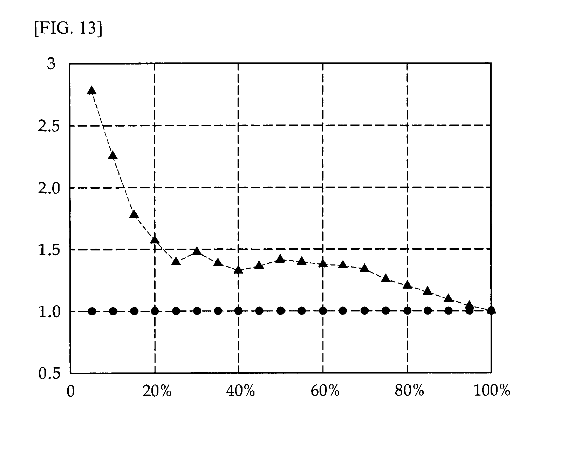

Moreover, according to the study conducted at Tianjin University in the People's Republic of China, it is said that if the average intensity remains the same as illustrated in FIG. 13, an LED driven by a PWM control method is felt brighter than an LED driven by a constant current control method. Furthermore, referring to FIG. 11, it can be noted that if a pulse voltage having a shorter duty cycle is used, a difference in apparent brightness between the PWM control method and the constant current control method becomes larger. The term "apparent brightness" refers to a psychological quantity of the contrast corresponding to the brightness which is a physical quantity of light. That is to say, the apparent brightness means a human-felt brightness rather than a real brightness.

Referring to FIG. 13, it can be appreciated that if the frequency is 100 Hz and if the duty cycle is 50%, the light is felt about 40% brighter in the PWM control method than in the constant current control method. It can be seen that if the duty cycle is 80%, the light is felt about 25% brighter in the PWM control method than in the constant current control method. It can be noted that if the duty cycle is 100%, no difference in the brightness exists between the PWM control method and the constant current control method.

These results can also be confirmed in the study conducted at Ehime University in Japan. According to the study conducted at Ehime University, it is said that if an LED is driven at a duty cycle of 50% and at a pulse voltage of 60 Hz, the light is felt 120% brighter at the most in the PWM drive method than in the constant current drive method.

It can be expected from the results illustrated in FIG. 13 that if the average intensity remains the same, an LED driven by a pulse voltage having a larger intensity and a shorter duty cycle will be felt brighter than an LED driven by a pulse voltage having a smaller intensity and a longer duty cycle.

### [Prior Art Document]

### [Patent Document]

Korean Patent No. 10-0971757
Korean Patent Application Publication No. 10-2012-0041093
Korean Patent Application Publication No. 10-2010-0104362
Korean Patent Application Publication No. 10-2012-0082468
Korean Patent Application Publication No. 10-2012-0074502
U.S. Patent No. 8,299,724
U.S. Patent Application Publication No. 2012-0229041
Korean Patent Application Publication No. 10-2011-0091444

### [Non-Patent Document]

Masafumi JINNO, Keiji MORITA, Yudai TOMITA, Yukinobu TODA, Hideki MOTOMURA (2008), "Effective illuminance improvement of light source by using pwm", J. Light & Vis. Env. Vol. 32, No. 2, 2008
Zhang Yinxin, Zhang Zhen, Huang Zhanhua, Cai Huaiyu, Xia Lin, Zhao Jie (2008), "Apparent Brightness of LEDs under Different dimming Methods" Proc. of SPIE Vol. 6841 684109

### Summary of the Invention

### Technical Problems

It is an object of the present invention to provide a power supply circuit capable of increasing the flickering frequency of a light-emitting diode by applying a high-pulse-type voltage higher than a drive voltage to a region around a phase of 180 degrees through the use of a charging/discharging circuit and a switch.

Another object of the present invention is to provide a power supply circuit which enables a light-emitting diode to exhibit the same level of apparent brightness while consuming a relatively small amount of electric power.

A further object of the present invention is to provide a power supply circuit capable of increasing the power supply efficiency by setting a drive voltage high and capable of improving the use efficiency of a light-emitting diode by broadening a phase region where the light-emitting diode is turned on.

A still further object of the present invention is to provide a power supply circuit capable of reducing a total harmonic distortion of a drive terminal current waveform and improving a power factor by adjusting a charging start point of a charging/discharging circuit and by increasing a current of an output terminal of a rectifier circuit in response to an increase in the magnitude of a voltage outputted from the rectifier circuit.

### Technical Solutions

In order to solve the aforementioned problems, a power supply circuit according to the present invention includes: a rectifier circuit connected to an alternating voltage source and configured to full-wave rectify an alternating voltage of the alternating voltage source; a charging/discharging circuit charged by a voltage outputted from the rectifier circuit and configured to supply charged energy to a light-emitting diode array; a switching circuit configured to selectively connect or disconnect a discharging route through which the energy charged in the charging/discharging circuit is delivered to the light-emitting diode array; and a controller configured to control the switching circuit so that the charging/discharging circuit is discharged in an A interval where the magnitude of an output voltage of the rectifier circuit is smaller than a drive voltage of the light-emitting diode array and so that the light-emitting diode array is turned off, turned on and turned off at least once in the A interval.

By allowing the light-emitting diode array to flicker in the A interval, it is possible to increase the flickering frequency of the light-emitting diode array. This provides an effect of increasing the light-emitting diode use efficiency. Furthermore, it is possible to anticipate a visibility improvement effect.

Preferably, the switching circuit of the power supply circuit may include a frequency altering switch configured to selectively connect or disconnect a route through which the voltage outputted from the rectifier circuit is delivered to the light-emitting diode array. The controller may be configured to control the frequency altering switch so that the light-emitting diode array is turned off at least once in a B interval where the magnitude of the output voltage of the rectifier circuit falls within a range of the drive voltage of the light-emitting diode array.

Preferably, the switching circuit may include a charging switch configured to selectively connect or disconnect a route through which the voltage outputted from the rectifier circuit is delivered to the charging/discharging circuit. The controller may be configured to control the charging switch so that when the voltage outputted from the rectifier circuit is equal to or higher than a predetermined value, charging of the charging/discharging circuit is started so as to reduce a total harmonic distortion of a current waveform flowing through an output terminal of the rectifier circuit.

Preferably, the power supply circuit may further include: a power factor improvement circuit configured so that when the voltage outputted from the rectifier circuit is equal to or lower than a predetermined value, the power factor improvement circuit is connected to an output terminal of the rectifier circuit to store or consume electric energy so as to reduce a total harmonic distortion of a current waveform flowing through the output terminal of the rectifier circuit.

Preferably, the power supply circuit may further include: a current limiting circuit configured to limit a current flowing through the charging/discharging circuit so as to reduce a total harmonic distortion of a current waveform flowing through an output terminal of the rectifier circuit.

The switching circuit may include a charging switch configured to selectively connect or disconnect a route through which the voltage outputted from the rectifier circuit is delivered to the charging/discharging circuit. The controller may be configured to control the charging switch so that the charging/discharging circuit is charged at a time point at which the frequency altering switch is turned off.

In the power supply circuit, the charging/discharging circuit may be serially connected to the rectifier circuit and the light-emitting diode array. The switching circuit may include a first bypass switch installed in a route which bypasses the charging/discharging circuit, a second bypass switch installed in a route which bypasses the light-emitting diode array, and a connection switch installed in a route which serially interconnects the charging/discharging circuit and the light-emitting diode array. The controller may be configured to control the switching circuit so as to: turn on the first bypass switch and turn off the connection switch so that a voltage of an output terminal of the rectifier circuit is directly applied to the light-emitting diode array in a B interval where the magnitude of the output voltage of the rectifier circuit falls within a range of the drive voltage of the light-emitting diode array; turn off the first bypass switch and turn on the connection switch so that the voltage of the output terminal of the rectifier circuit is divisionally applied to the light-emitting diode array and the charging/discharging circuit in a C interval where the magnitude of the output voltage of the rectifier circuit exceeds the drive voltage of the light-emitting diode array; and turn on the first bypass switch and turn on and off the second bypass switch so that the charging/discharging circuit is discharged in the A interval where the magnitude of the output voltage of the rectifier circuit is smaller than the drive voltage of the light-emitting diode array and so that the light-emitting diode array is turned off, turned on and turned off at least once in the A interval.

In this regard, the charging/discharging circuit may be a charge pump which includes a plurality of capacitors and a switching device configured to connect the capacitors in parallel or in series. The controller may be configured to control the switching device so that the capacitors are serially connected when the charging/discharging circuit is discharged in the A interval.

### Advantageous Effects

The power supply circuit according to the present invention may apply, through the use of a charging/discharging circuit and a switch, a high-pulse-type voltage higher than a drive voltage to a region around a phase of 180 degrees where a voltage applied by an alternating voltage source, which is equal to or lower than the drive voltage, cannot drive light-emitting diodes. This makes it possible to increase the flickering frequency of the light-emitting diodes to become 240 Hz or higher (in the case of an AC power supply of 60 Hz). Since the light-emitting diodes are flickered by the pulse voltage in the region around the phase of 180 degrees where the light-emitting diodes are turned off, the flickering frequency of the light-emitting diodes increases twice. This makes it possible to improve a flicker phenomenon.

Furthermore, in a lighting system which makes use of the present power supply circuit, the light-emitting diodes are flickered by the pulse voltage in the region around the phase of 180 degrees. This makes it possible to maintain the apparent brightness at the same level as that of a lighting system which makes use of other power supply circuits, while consuming a relatively small amount of electric power according to the Broca-Sulzer law.

Moreover, the power supply circuit according to the present invention may reduce a total harmonic distortion of a drive terminal current waveform and may improve a power factor by adjusting a charging start point of a charging/discharging circuit and by increasing a current of an output terminal of a rectifier circuit in response to an increase in the magnitude of a voltage outputted from the rectifier circuit.

In addition, the problem in that, if a drive voltage is set high, the light-emitting diodes are not driven in a significant region around a phase of 180 degrees, may be solved by a method in which a high-pulse-type voltage higher than the drive voltage is applied to the region around the phase of 180 degrees. This makes it possible to simultaneously improve the power supply efficiency and the light-emitting diode use efficiency.

Furthermore, in some embodiments, it may be possible to apply, through a switching operation, a voltage higher than a drive voltage to light-emitting diodes in the form of a pulse having a higher frequency.

### Brief Description of the Drawings

Fig. 1 is a view schematically illustrating a power supply circuit according to one embodiment of the present invention.
Fig. 2 is a block diagram of a controller illustrated in FIG. 1.
FIG. 3 is a view illustrating one example of a voltage waveform of an input source and a current waveform inputted to a light-emitting diode array in the power supply circuit illustrated in FIG. 1.
FIG. 4 is a view illustrating a current waveform at an output terminal of a rectifier circuit when the current waveform illustrated in FIG. 3 is inputted to a light-emitting diode array in the power supply circuit illustrated in FIG. 1.
FIG. 5 is a view illustrating another example of the current waveform at the output terminal of the rectifier circuit in the power supply circuit illustrated in FIG. 1.
FIG. 6 is a view illustrating another example of the voltage waveform of the input source and the current waveform inputted to the light-emitting diode array in the power supply circuit illustrated in FIG. 1.
FIG. 7 is a view illustrating a further example of the voltage waveform of the input source and the current waveform inputted to the light-emitting diode array in the power supply circuit illustrated in FIG. 1.
Fig. 8 is a view schematically illustrating a power supply circuit according to another embodiment of the present invention.
Fig. 9 is a view schematically illustrating a power supply circuit according to a further embodiment of the present invention.
FIG. 10 is a view illustrating one example of a voltage waveform of an input source and a current waveform inputted to a light-emitting diode array in the power supply circuit illustrated in FIG. 9.
Fig. 11 is a view schematically illustrating a power supply circuit according to a still further embodiment of the present invention.
FIG. 12 is a view illustrating one example of a voltage waveform of an input source and a current waveform inputted to a light-emitting diode array in the power supply circuit illustrated in FIG. 11.
FIG. 13 is a graph plotting a change in a ratio of an average intensity to an apparent brightness which depends on a duty cycle.

### Mode for Carrying out the Invention

The present invention will now be described in detail with reference to the accompanying drawings.

Embodiments described below are provided to sufficiently transfer the spirit of the present invention to a person skilled in the art. Accordingly, the present invention is not limited to the embodiments described below but may be embodied in many different forms.

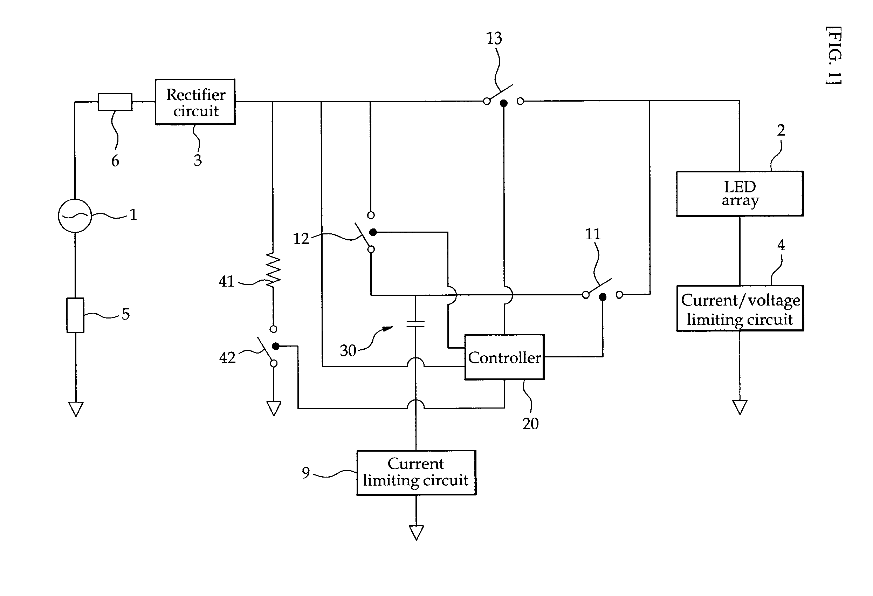

Fig. 1 is a view schematically illustrating a power supply circuit according to one embodiment of the present invention.

Referring to FIG. 1, the power supply circuit according to one embodiment of the present invention includes a switching circuit, a controller 20, a charging/discharging circuit 30, a rectifier circuit 3 and a current/voltage limiting circuit 4. In the present embodiment, the switching circuit includes a first switch 11, a second switch 12, and a third switch 13.

The power supply circuit according to one embodiment of the present invention effectively controls the charging start point and the discharging start point of the charging/discharging circuit 30 connected to the rectifier circuit 3, so that a light-emitting diode array 2 can be operated even when the magnitude of a voltage outputted from the rectifier circuit 3 is equal to or smaller than a load drive voltage. This makes it possible to increase the flickering frequency of the light-emitting diode array 2 and to increase the light-emitting diode use efficiency (the effective power consumption of the light-emitting diode/the power consumption of the light-emitting diode during the DC rated current operation).

The rectifier circuit 3 serves to full-wave rectify an inputted alternating voltage. The rectifier circuit 3 may be a bridge diode circuit. As illustrated in FIG. 1, the rectifier circuit 3 may be installed between an alternating voltage source 1 and the charging/discharging circuit 30.

The switches 11, 12 and 13 may be configured by MOSFET (Metal Oxide Semiconductor Field Effect Transistor) switches or the like. The first switch 11 installed in a route which interconnects the charging/discharging circuit 30 and the light-emitting diode array 2 is used as a discharging switch which adjusts the start point and the end point of a discharging interval of the charging/discharging circuit 30. The second switch 12 installed in a route which interconnects the output terminal of the rectifier circuit 3 and the charging/discharging circuit 30 is used as a charging switch which adjusts the start point and the end point of a charging interval of the charging/discharging circuit 30. By adjusting the discharging start point the discharging end point, the first switch 11 allows the light-emitting diode array 2 to be turned off, turned on and then turned off in an A region where the magnitude of the output voltage of the rectifier circuit 3 is equal to or smaller than the drive voltage of the light-emitting diode array 2. That is to say, the first switch 11 allows the light-emitting diode array 2 to flicker at least once in the A region which is a turned-off interval of the light-emitting diode array 2.

If the second switch 12 is turned on, the output terminal of the rectifier circuit 3 is connected to the charging/discharging circuit 30, whereby charging occurs in the charging/discharging circuit 30. If the first switch 11 is turned on, the charging/discharging circuit 30 is connected to the light-emitting diode array 2. Thus, discharging occurs in the charging/discharging circuit 30 so that electric power is supplied to the light-emitting diode array 2.

The third switch 13 installed in a route which serially interconnects the output terminal of the rectifier circuit 3 and the light-emitting diode array 2 is used as a frequency altering switch which adjusts the time point at which the voltage outputted from the rectifier circuit 3 is applied to the light-emitting diode array 2. If the third switch 13 is turned off, the voltage is not applied to the light-emitting diode array 2. The third switch 13 serves to alter the flickering frequency of the light-emitting diode array 2.

The controller 20 checks the magnitude or the phase of the voltage outputted from the rectifier circuit 3 and controls the first switch 11 and the second switch 12, thereby controlling the start point and the end point of each of the discharging interval and the charging interval.

Furthermore, the controller 20 controls the on/off time of the third switch 13. If the magnitude of the voltage outputted from the rectifier circuit 3 is equal to or higher than the drive voltage of the light-emitting diode array 2, the third switch 13 may be kept in a turned-on state or may be repeatedly turned on and off.

In the case where the third switch 13 is repeatedly turned on and off, the light-emitting diode array 2 is driven by a pulse voltage. The form of the pulse voltage is determined by adjusting the turned-on time and the turned-off time of the third switch 13.

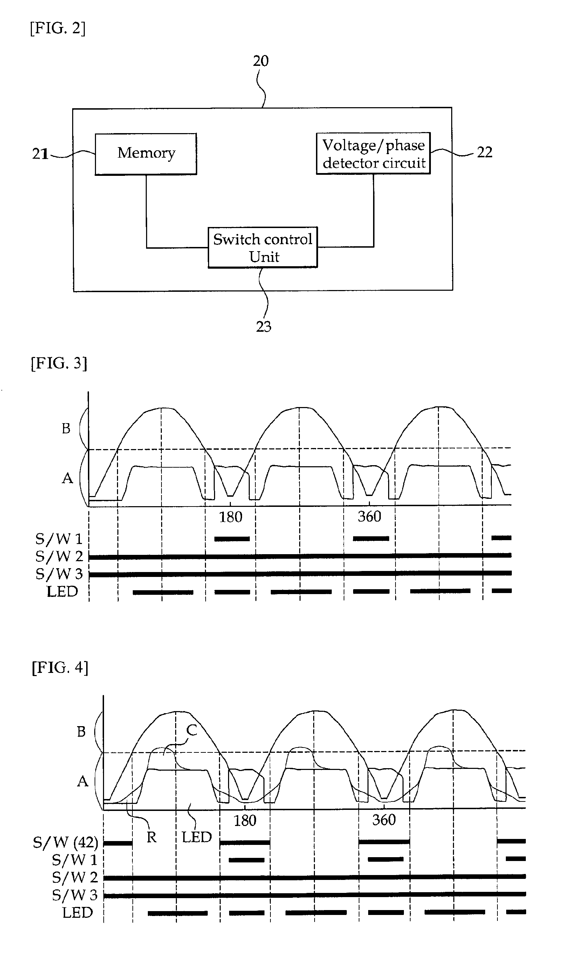

Fig. 2 is a block diagram of the controller illustrated in FIG. 1. Referring to FIG. 2, the controller 20 includes a memory 21, a voltage/phase detector circuit 22 and a switch control unit 23. The voltage detector circuit checks a range within which an instantaneous value of the voltage outputted from the rectifier circuit 3 falls. As the voltage detector circuit, it may be possible to use different circuits which are widely used in the field of electronic circuits. For example, a voltage comparator which employs a plurality of operational amplifiers may be used as the voltage detector circuit. The controller 20 may employ a phase detector circuit instead of the voltage detector circuit that directly detects the voltage. The phase detector circuit may be configured by a zero-crossing detector that detects the moment at which the instantaneous value of the voltage becomes 0. Since the instantaneous value of the voltage outputted from the rectifier circuit 3 varies depending on the phase, it is possible to know the change in the instantaneous value from the change in the phase.

In the memory 21, there are stored drive data for driving the switches 11, 12 and 13 depending on the magnitude of the voltage outputted from the rectifier circuit 3. The drive data are determined depending on the number of light-emitting diodes, the drive voltage, the required flickering frequency of the light-emitting diodes, etc.

Instead of using the memory 21, the switches 11, 12 and 13 may be controlled depending on the voltage or the phase detected on a channel-by-channel basis or using a counter element such as a timer or the like.

The charging/discharging circuit 30 is charged by the output voltage of the rectifier circuit 3 and is then discharged in an interval where the magnitude of the output voltage of the rectifier circuit 3 is equal to or smaller than the drive voltage of the light-emitting diode array 2, thereby applying electric power to the light-emitting diode array 2. In the present embodiment, a capacitor is used as one example of the charging/discharging circuit 30. If the second switch 12 is turned on, the charging/discharging circuit 30 is connected to the rectifier circuit 3 and electric energy is stored in the charging/discharging circuit 30. If the first switch 11 is turned on, the charging/discharging circuit 30 is connected to the light-emitting diode array 2. Thus, discharging occurs in the charging/discharging circuit 30 to supply electric power to the light-emitting diode array 2. An inductor may be used as the charging/discharging circuit 30.

A current/voltage limiting circuit 4 serves to limit the current or the voltage applied to a load. The current/voltage limiting circuit 4 is used to prevent an excessive current from flowing through the light-emitting diode array 2 and is serially connected to the light-emitting diode array 2. The current limiting circuit may be configured by a resistor, a capacitor, a bipolar transistor, a MOS transistor, etc. Furthermore, the current limiting circuit may be configured by a field effect transistor (FET) or a combination of a transistor (TR) and an auxiliary element or by an integrated circuit such as an operational amplifier or a regulator.

Furthermore, the power supply circuit may further include a surge protection circuit for protecting the power supply circuit from a surge voltage. The surge protection circuit may be configured by a resistor 6 disposed between the rectifier circuit 3 and the alternating voltage source 1, a surge suppression element (not illustrated), a fuse 5, etc.

Moreover, the power supply circuit may preferably further include a current limiting circuit 9 serially connected to the second switch 12 and disposed, for example, between the second switch 12 and the ground as illustrated in FIG. 1. In the present embodiment, if the second switch 12 is turned on, a current suddenly flows toward the charging/discharging circuit 30. At this time, a harmonic component is generated in a current waveform flowing through the output terminal of the rectifier circuit 3. If the current flowing toward the charging/discharging circuit 30 during a charging process is limited by the current limiting circuit 9, it is possible to reduce a total harmonic distortion (THD).

In order to improve the power factor by minimizing the difference between the current waveform and the voltage waveform in the A interval where the magnitude of the output voltage of the rectifier circuit 3 is equal to or smaller than the drive voltage of the light-emitting diode array 2 and to reduce the total harmonic distortion of the current waveform flowing through the output terminal of the rectifier circuit 3, the power supply circuit may further include a power factor improvement circuit configured to store or consume energy in the A interval. The power factor improvement circuit may be formed of a resistor or a capacitor and a switch. For example, as illustrated in FIG. 1, the power factor improvement circuit may include a resistor 41 parallel-connected to the rectifier circuit 3 and a switch 42 installed in a route which interconnects the resistor 41 and the rectifier circuit 3. If the switch 42 is turned on in the A interval, the voltage of the output terminal of the rectifier circuit 3 is applied to the resistor 41. A current having a sine waveform flows through the resistor 41 in proportion to the voltage. In the A interval, a current does not flow toward the light-emitting diode array 2. Thus, the current flowing through the resistor 41 becomes equal to the current flowing through the output terminal of the rectifier circuit 3. By bringing the form of the current at the output terminal of the rectifier circuit 3 into substantial conformity with the form of the voltage in this way, it is possible to improve the power factor. It is also possible to prevent a large amount of current from flowing through the output terminal of the rectifier circuit 3 and to prevent a large amount of harmonic component from being generated during the transition from the A interval to the B interval.

FIG. 3 is a view illustrating one example of the voltage waveform of the input source and the current waveform inputted to the light-emitting diode array in the power supply circuit illustrated in FIG. 1. An operation of the power supply circuit will now be described with reference to FIG. 3.

If it is determined that the magnitude of the output voltage of the rectifier circuit 3 measured in the controller 20 falls within the A region where the magnitude of the output voltage of the rectifier circuit 3 is smaller than the drive voltage, the second switch 12 and the third switch 13 are turned on and the first switch 11 is turned off (The first switch 11 is turned off because the charging/discharging circuit 30 is not yet charged). Even if the third switch 13 is turned on, the light-emitting diode array 2 is not turned on because the voltage of the input source is lower than the drive voltage.

Since the second switch 12 is turned on, the charging/discharging circuit 30 is charged. However, electric energy high enough to operate the light-emitting diode array 2 is not stored because the voltage remains low.

If the magnitude of the output voltage of the rectifier circuit 3 measured in the controller 20 reaches the B region which is a drive voltage range, the light-emitting diode array 2 is turned on because the voltage of the input source is equal to or higher than the drive voltage. Since the second switch 12 is kept turned on, electric energy is continuously charged in the capacitor as the charging/discharging circuit 30. If the charging is completed, the second switch 12 may be turned off or may be continuously turned on as illustrated in FIG. 3.

If it is determined that the magnitude of the output voltage of the rectifier circuit 3 measured in the controller 20 reaches the A region again, the first switch 11 is turned on after a predetermined time is elapsed. Thus, the electric energy charged in the capacitor is supplied to the light-emitting diode array 2, thereby turning on the light-emitting diode array 2. The first switch 11 is turned off at a predetermined time point after the start of discharging, thereby turning off the light-emitting diode array 2 again. That is to say, the light-emitting diodes are allowed to flicker once in the A region. In this case, the start and end time points of the discharging are determined in conjunction with variables such as a forward voltage of the light-emitting diodes, a charging capacity, a voltage variation of the input source, a preset drive frequency and the like.

In the present embodiment, the light-emitting diode array 2 is turned on when the magnitude of the output voltage of the rectifier circuit 3 migrates from the A region to the B region. The light-emitting diode array 2 is turned off if the magnitude of the output voltage of the rectifier circuit 3 reaches the A region. In the A region, the light-emitting diode array 2 is turned on when a voltage generated by the discharging of the charging/discharging circuit 30 is applied thereto. The light-emitting diode array 2 is turned off again when the discharging is stopped. That is to say, if it is assumed that the light-emitting diode array 2 is driven by the alternating voltage source 1 of 60 Hz, the flickering frequency of the light-emitting diode array 2 is increased to 240 Hz. Depending on the ratio of the turned-on time of the light-emitting diode array 2 in the B region to the turned-on time of the light-emitting diode array 2 in the A region, a component of 120 Hz and a component of 240 Hz may appear together in the flickering frequency spectrum of the light-emitting diode array 2. Most of the human eyes are difficult to feel a flicker as the frequency increases. Thus, a flicker phenomenon may be improved in the aforementioned manner.

Furthermore, in the A region, a pulse-type current is applied to the light-emitting diode array 2. Therefore, as described in the Background Art, it is possible to anticipate the effect of improvement of an apparent brightness according to the Broca-Sulzer law.

As set forth above, the current waveform illustrated in FIG. 3 may be obtained while continuously turning on the second switch 12 and the third switch 13. Accordingly, in the embodiment illustrated in FIG. 1, it may be possible to remove the second switch 12 and the third switch 13. That is to say, if there is no need to adjust the charging start point and the charging end point, the second switch 12 may be removed. If the flickering frequency of higher than 240 Hz is not required, the third switch 13 may be removed.

FIG. 4 is a view illustrating a current waveform at the output terminal of the rectifier circuit when the current waveform illustrated in FIG. 3 is inputted to the light-emitting diode array in the power supply circuit illustrated in FIG. 1.

The current waveform at the output terminal of the rectifier circuit 3 is the sum of currents flowing through the light-emitting diode array 2, the charging/discharging circuit 30 and the resistor 41. The power factor is determined by the current waveform and the voltage waveform at the output terminal of the rectifier circuit 3. Accordingly, it is preferred that the current waveform is similar in form to the voltage waveform at the output terminal of the rectifier circuit 3. In FIG. 4, the current flowing through the resistor 41 is denoted by R, the current flowing through the charging/discharging circuit 30 is denoted by C, and the current flowing through the light-emitting diode array 2 is denoted by LED.

As illustrated in FIG. 4, in the A interval, the majority of a current flows through the resistor 41. The current flowing through the resistor 41 is proportional to the voltage generated across the opposite ends of the resistor 41 and, therefore, has a sine wave form. Since the magnitude of the output voltage of the rectifier circuit 3 is equal to or smaller than the drive voltage of the light-emitting diode array 2, a current scarcely flows through the light-emitting diode array 2. Since a voltage is applied to the charging/discharging circuit 30 by the electric charges which remain without being completely discharged in the prior cycle, a current scarcely flows through the charging/discharging circuit 30.

In the B interval, the switch 42 is turned off and a current does not flow through the resistor 41. Instead, a current flows through the light-emitting diode array 2. This current is limited by the current limiting circuit 4 so that a current having a predetermined value or more does not flow through the light-emitting diode array 2. Furthermore, a current flows through the charging/discharging circuit 30. The current flowing through the charging/discharging circuit 30 is limited by the current limiting circuit 9. At this time, a preset charging current limit value affects the total harmonic distortion.

If the magnitude of the output voltage of the rectifier circuit 3 reaches the A interval again, the switch 42 is turned on. A current flows through the resistor 41. In the A interval, the current supplied from the charging/discharging circuit 30 flows toward the light-emitting diode array 2, but the current supplied from the output terminal of the rectifier circuit 3 flows toward the resistor 41.

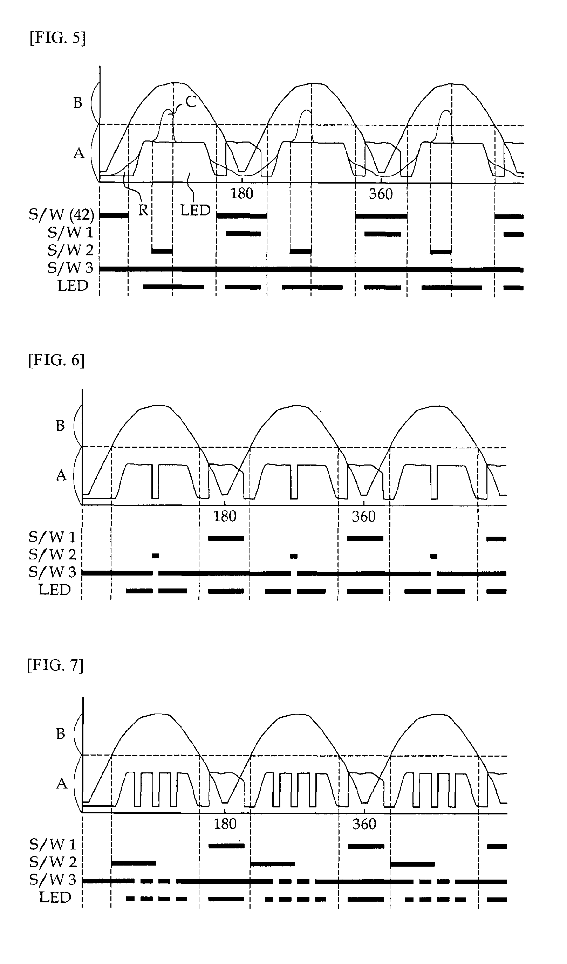

FIG. 5 is a view illustrating another example of the current waveform at the output terminal of the rectifier circuit in the power supply circuit illustrated in FIG. 1. As illustrated in FIG. 5, if the time point at which the second switch 12 is turned on in the B interval is adjusted, it is possible to adjust the current waveform at the output terminal of the rectifier circuit 3 so as to come close to the voltage waveform at the output terminal of the rectifier circuit 3. This makes it possible to improve the total harmonic distortion.

FIG. 6 is a view illustrating another example of the voltage waveform of the input source and the current waveform inputted to the light-emitting diode array in the power supply circuit illustrated in FIG. 1. In this example, the light-emitting diode array 2 is turned off once in the B region and the flickering frequency of the light-emitting diode array 2 is increased to 360 Hz.

If it is determined that the magnitude of the output voltage of the rectifier circuit 3 measured in the controller 20 falls within the A region where the magnitude of the output voltage of the rectifier circuit 3 is smaller than the drive voltage, the third switch 13 is turned on and the first switch 11 and the second switch 12 are turned off.

Even when it is determined that the magnitude of the output voltage of the rectifier circuit 3 measured in the controller 20 reaches the B region which is a drive voltage range, the third switch 13 is kept turned on except the interval in which the light-emitting diode array 2 is turned off. If the magnitude of the output voltage of the rectifier circuit 3 reaches an interval of the B region in which the light-emitting diode array 2 is to be turned off, the third switch 13 is turned off and then turned on after a predetermined time is elapsed. In the case where the light-emitting diode array 2 is turned off once in the B interval, the flickering frequency is increased to 360 Hz as illustrated in FIG. 6. In the present embodiment, there is no great difference in the width of the current pulse flowing through the light-emitting diode array 2 in the A interval and the B interval. Thus, only a component of 360 Hz appears in the flickering frequency spectrum of the light-emitting diode array 2.

If there is a need to further increase the flickering frequency, the number of flickering times may be increased in the B interval as illustrated in FIG. 7. In this case, the duty cycle and the frequency may be adjusted by adjusting the on/off time of the third switch 13. Preferably, the on/off time of the third switch 13 is adjusted so that the magnitude of average electric power applied to a load becomes constant. If the turned-on time of the third switch 13 is made longer in the region where the magnitude of the voltage is small and if the turned-on time of the third switch 13 is made shorter in the region where the magnitude of the voltage is large, it is possible to make constant the magnitude of average electric power applied to a load.

As illustrated in FIG. 6, the second switch 12 is turned on in synchronism with the third switch 13 during the period in which the third switch 13 is turned off. Alternatively, the second switch 12 may be turned off when the third switch 13 is turned on, or may be turned on and off regardless of the third switch 13. As illustrated in FIG. 7, the second switch 12 may be turned on in some parts of the B interval and then may be turned off if the charging is completed. Even if the second switch 12 is not turned off, the charging/discharging circuit 30 is no longer changed because the voltage of the charging/discharging circuit 30 is higher than the voltage of the output terminal of the rectifier circuit 3.

If it is determined that the magnitude of the output voltage of the rectifier circuit 3 reaches the A region again, the first switch 11 is turned on after a predetermined time is elapsed, so that the electric energy charged in the capacitor is supplied to the light-emitting diode array 2. The first switch 11 is turned off at a predetermined time point after the discharging is started, thereby turning off the light-emitting diode array 2 again. The discharging start point and the discharging end point may be appropriately selected within the A region.

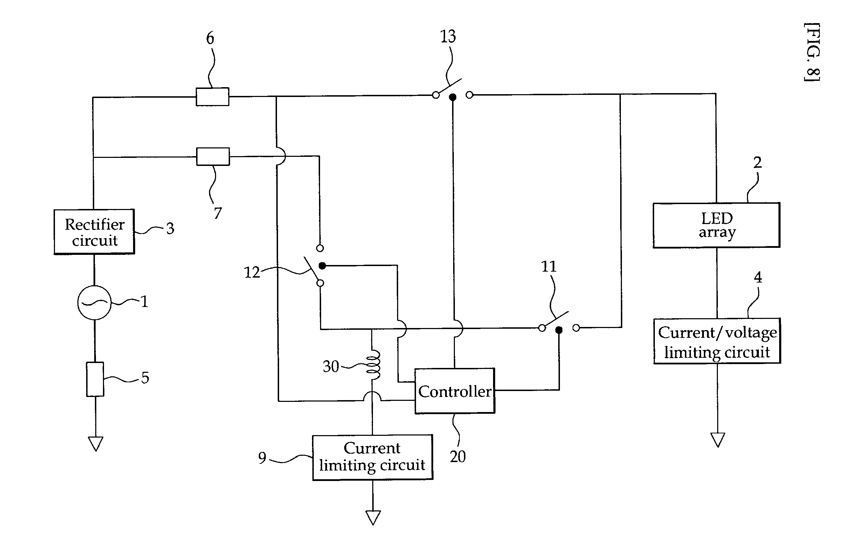

Fig. 8 is a view schematically illustrating a power supply circuit according to another embodiment of the present invention.

In the present embodiment, instead of the capacitor, an inductor is used as the charging/discharging circuit 30. Additional resistors 6 and 7 are installed respectively between the alternating voltage source 1 and the load and between the alternating voltage source 1 and the charging/discharging circuit 30. In the present embodiment, instead of the inductor, a capacitor may be used as the charging/discharging circuit 30.

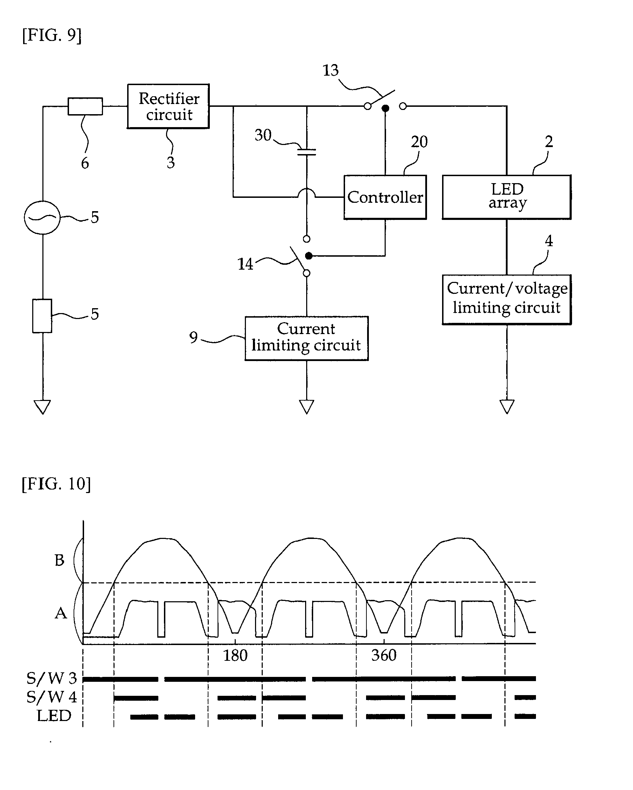

Fig. 9 is a view schematically illustrating a power supply circuit according to a further embodiment of the present invention.

The power supply circuit according to the present embodiment includes, instead of the first switch 11 and the second switch 12, a fourth switch 14 installed between the charging/discharging circuit 30 and the ground. If the fourth switch 14 is turned on, charging is performed. If the fourth switch 14 is turned off, charging is stopped. If the fourth switch 14 is turned on again in the charged state, discharging is performed. If the fourth switch 14 is turned off, discharging is stopped. That is to say, in the present embodiment, the fourth switch 14 serves as both a charging switch and a discharging switch.

FIG. 10 is a view illustrating one example of a voltage waveform of an input source and a current waveform inputted to a light-emitting diode array in the power supply circuit illustrated in FIG. 9. An operation of the power supply circuit according to the present embodiment will be described with reference to FIG. 10.

If it is determined that the magnitude of the output voltage of the rectifier circuit 3 measured in the controller 20 falls within the A region where the magnitude of the output voltage of the rectifier circuit 3 is smaller than the drive voltage, the third switch 13 is turned on and the fourth switch 14 is turned off. Even if the third switch 13 is turned on, the light-emitting diode array 2 is not turned on because the voltage of the input source is lower than the drive voltage.

Even when it is determined that the magnitude of the output voltage of the rectifier circuit 3 measured in the controller 20 reaches the B region which is a drive voltage range, the third switch 13 is kept turned on except the interval in which the light-emitting diode array 2 is turned off. If the magnitude of the output voltage of the rectifier circuit 3 reaches an interval of the B region in which the light-emitting diode array 2 is to be turned off, the third switch 13 is turned off and then turned on after a predetermined time is elapsed. In the case where the light-emitting diode array 2 is flickered once in the B interval, the flickering frequency is increased to 360 Hz as illustrated in FIG. 8.

In the B interval, the fourth switch 14 is turned on in synchronism with the third switch 13 during the period in which the third switch 13 is turned off. Alternatively, the fourth switch 14 may be turned off when the third switch 13 is turned on, or may be turned on and off regardless of the third switch 13.

If it is determined that the magnitude of the output voltage of the rectifier circuit 3 falls within the A region again, the fourth switch 14 is turned on after a predetermined time is elapsed, so that the electric energy charged in the capacitor is supplied to the light-emitting diode array 2. The fourth switch 14 is turned off at a predetermined time point after the discharging is started, thereby turning off the light-emitting diode array 2 again. The discharging start point and the discharging end point may be appropriately selected within the A region.

If the third switch 13 is repeatedly turned on and off in the B interval, a current having a pulse form illustrated in FIG. 7 is inputted to the light-emitting diode array 2.

Fig. 11 is a view schematically illustrating a power supply circuit according to a still further embodiment of the present invention. The power supply circuit according to the present embodiment includes an alternating voltage source 1, a rectifier circuit 3 for full-wave rectifying the voltage of the alternating voltage source 1, a charging/discharging circuit 35, a light-emitting diode array 2 and a current limiting circuit 4, wherein the charging/discharging circuit 35, the light-emitting diode array 2 and the current limiting circuit 4 are serially connected to the output terminal of the rectifier circuit 3 in the named order.

The power supply circuit according to the present embodiment further includes a first bypass switch 15 configured to bypass the charging/discharging circuit 35 and installed on a line which serially interconnects the rectifier circuit 3 and the light-emitting diode array 2, a second bypass switch 16 configured to bypass the light-emitting diode array 2 and installed on a line which serially interconnects the charging/discharging circuit 35 and the current limiting circuit 4, and a connection switch 17 installed between the charging/discharging circuit 35 and the light-emitting diode array 2. The first bypass switch 15, the second bypass switch 16 and the connection switch 17 are operated by control signals of the controller 20.

FIG. 12 is a view illustrating one example of a voltage waveform of an input source and a current waveform inputted to a light-emitting diode array in the power supply circuit illustrated in FIG. 11. In the case where the magnitude of the full-wave rectified voltage outputted from the rectifier circuit 3 falls within an A region, the first bypass switch 15 is turned on and the second bypass switch 16 and the connection switch 17 are turned off. Even when the first bypass switch 15 is turned on, the light-emitting diode array 2 is not turned on because a voltage lower than the drive voltage of the light-emitting diode array 2 is applied to the light-emitting diode array 2.

If the magnitude of the full-wave rectified voltage reaches a B region, the light-emitting diode array 2 is turned on.

If the magnitude of the full-wave rectified voltage increases beyond the drive voltage and reaches a C region, the first bypass switch 15 is turned off and the connection switch 17 is turned on. Thus, the voltage is distributed to the charging/discharging circuit 35 and the light-emitting diode array 2. Parallel-connected capacitors of the charging/discharging circuit 35 are changed by the voltage thus distributed and applied. The light-emitting diode array 2 is continuously turned on.

If the magnitude of the full-wave rectified voltage reaches the B region again, the connection switch 17 is turned off and the first bypass switch 15 is turned on.

If the magnitude of the full-wave rectified voltage reaches the A region again, the second bypass switch 16 is turned on after a predetermined time is elapsed. Thus, the electric energy stored in the charging/discharging circuit 35 is supplied to the light-emitting diode array 2. At a predetermined time point after the discharging is started, the second bypass switch 16 is turned off, thereby turning off the light-emitting diode array 2 again.

If necessary, for example, if the drive voltage is set high so that the light-emitting diode array 2 cannot be driven by a single capacitor, it may be possible to use a charge pump. In the charge pump, charging is performed by serially connecting the charging/discharging circuit 35 having two or more parallel-connected capacitors to the light-emitting diode array 2. When charging is performed in the A region, the capacitors are switched to serial connection by an additional switching device and are parallel-connected to the light-emitting diode array 2.

It is to be understood that the embodiments described above are exemplary in all respects and are not limitative. The scope of the present invention is defined by the appended claims rather than the forgoing descriptions. All the changes and modifications derived from the claims and the equivalent concept thereof shall be construed to fall within the scope of the present invention.

### Description of Reference Symbol

1: alternating voltage source, 2: light-emitting diode array, 3: rectifier circuit, 11: first switch, 12: second switch, 13: third switch, 14: fourth switch, 20: controller, 30 or 35: charging/discharging circuit

## Claims

1. A power supply circuit for altering a flickering frequency of a light-emitting diode, comprising:
a rectifier circuit connected to an alternating voltage source and configured to full-wave rectify an alternating voltage of the alternating voltage source;
a charging/discharging circuit charged by a voltage outputted from the rectifier circuit and configured to supply charged energy to a light-emitting diode array;
a switching circuit configured to selectively connect or disconnect a discharging route through which the energy charged in the charging/discharging circuit is delivered to the light-emitting diode array; and
a controller configured to control the switching circuit so that the charging/discharging circuit is discharged in an A interval where the magnitude of an output voltage of the rectifier circuit is smaller than a drive voltage of the light-emitting diode array and so that the light-emitting diode array is turned off, turned on and turned off at least once in the A interval.

2. The power supply circuit of claim 1, wherein the switching circuit includes a frequency altering switch configured to selectively connect or disconnect a route through which the voltage outputted from the rectifier circuit is delivered to the light-emitting diode array, and
the controller is configured to control the frequency altering switch so that the light-emitting diode array is turned off at least once in a B interval where the magnitude of the output voltage of the rectifier circuit falls within a range of the drive voltage of the light-emitting diode array.

3. The power supply circuit of claim 1, wherein the switching circuit includes a charging switch configured to selectively connect or disconnect a route through which the voltage outputted from the rectifier circuit is delivered to the charging/discharging circuit, and
the controller is configured to control the charging switch so that when the voltage outputted from the rectifier circuit is equal to or higher than a predetermined value, charging of the charging/discharging circuit is started so as to reduce a total harmonic distortion of a current waveform flowing through an output terminal of the rectifier circuit.

4. The power supply circuit of claim 1, further comprising:
a power factor improvement circuit configured so that when the voltage outputted from the rectifier circuit is equal to or lower than a predetermined value, the power factor improvement circuit is connected to an output terminal of the rectifier circuit to store or consume electric energy so as to reduce a total harmonic distortion of a current waveform flowing through the output terminal of the rectifier circuit.

5. The power supply circuit of claim 1, further comprising:
a current limiting circuit configured to limit a current flowing through the charging/discharging circuit so as to reduce a total harmonic distortion of a current waveform flowing through an output terminal of the rectifier circuit.

6. The power supply circuit of claim 2, wherein the switching circuit includes a charging switch configured to selectively connect or disconnect a route through which the voltage outputted from the rectifier circuit is delivered to the charging/discharging circuit, and
the controller is configured to control the charging switch so that the charging/discharging circuit is charged at a time point at which the frequency altering switch is turned off.

7. The power supply circuit of claim 1, wherein the charging/discharging circuit is serially connected to the rectifier circuit and the light-emitting diode array,
the switching circuit includes a first bypass switch installed in a route which bypasses the charging/discharging circuit, a second bypass switch installed in a route which bypasses the light-emitting diode array, and a connection switch installed in a route which serially interconnects the charging/discharging circuit and the light-emitting diode array, and
the controller is configured to control the switching circuit so as to:
turn on the first bypass switch and turn off the connection switch so that a voltage of an output terminal of the rectifier circuit is directly applied to the light-emitting diode array in a B interval where the magnitude of the output voltage of the rectifier circuit falls within a range of the drive voltage of the light-emitting diode array;
turn off the first bypass switch and turn on the connection switch so that the voltage of the output terminal of the rectifier circuit is divisionally applied to the light-emitting diode array and the charging/discharging circuit in a C interval where the magnitude of the output voltage of the rectifier circuit exceeds the drive voltage of the light-emitting diode array; and
turn on the first bypass switch and turn on and off the second bypass switch so that the charging/discharging circuit is discharged in the A interval where the magnitude of the output voltage of the rectifier circuit is smaller than the drive voltage of the light-emitting diode array and so that the light-emitting diode array is turned off, turned on and turned off at least once in the A interval.

8. The power supply circuit of claim 7, wherein the charging/discharging circuit is a charge pump which includes a plurality of capacitors and a switching device configured to connect the capacitors in parallel or in series, and
the controller is configured to control the switching device so that the capacitors are serially connected when the charging/discharging circuit is discharged in the A interval.
